# EUROPEAN PATENT APPLICATION

(11) **EP 1 168 702 A1**
(43) Date of publication of application: **02.01.2002**
(21) Application number: 00401877.6
(22) Date of filing: 30.06.2000
(51) Int. Cl.: H04L 1/18

(54) **Data transmission system using a hybrid automatic repeat request protocol**

(71) Applicant: MOTOROLA, INC., Schaumburg, IL 60196 (US)
(72) Inventor: Garani, Pradeep, 31000 Toulouse (FR)
(74) Representative: Litchfield, Laura Marie

(57) **Abstract**

An automatic retransmit request (ARQ) telecommunications system reconstructs a first data block from one or more encoded first blocks received and stored by the system. Each encoded first block being encoded from the first data block using a forward error correction (FEC) scheme prior to reception by the system. The system includes a channel decoder configured to attempt to reconstruct the first data block from one or more of the received encoded first block and a packet controller, configured to request retransmission of the first data block as one or more subsequent encoded first blocks, when said one or more received encoded first blocks are determined to be corrupted such that the first data block cannot be reconstructed therefrom. The channel decoder further includes means for storing a flag indicative that the said first data block has been reconstructed, and means for discarding upon receipt any further encoded first blocks encoding the said first data block when the flag indicates that the said first data block has been reconstructed.

## Description

The present invention relates to data management in telecommunications systems using type II hybrid ARQ and similar communications schemes, and in particular to systems and methods for carrying out data management.

Data packets transmitted over telecommunications links, whether by radio, fixed wire, optical fibre or other means, are vulnerable to corruption. The transmission of some signals, such as audio in an analogue telephone system, are tolerant to corruption. Whereas transmission errors of an analogue audio signal lead to only a graceful degradation of the quality of the received communication, transmission errors in digitally coded data are often unacceptable. Consequently, error checking and retransmission facilities are nearly always used for digital data transmissions.

Type I hybrid ARQ communications schemes combine automatic repeat request (ARQ) with forward error correction (FEC) methods to provide more effective use of communications bandwidth in non-error tolerant communications links, at the expense of increased data processing requirements.

Adaptive hybrid ARQ schemes are also well known in which the type and operational parameters of FEC schemes used are varied dynamically to allow for varying transmission conditions.

Type II hybrid ARQ communications schemes combine ARQ with incremental redundancy reconstruction of datablocks encoded using FEC schemes.

The use of Type I and Type II hybrid ARQ schemes for non-error tolerant communication of digital data within mobile radio communications systems is becoming increasingly attractive as the available memory and data processing power within portable communications devices increases. The European Telecommunications Standards Institute has proposed including Type II hybrid ARQ within the new Enhanced General Packet Radio System standards for use with GSM networks.

Mobile stations for use with GSM networks are typically provided with separate digital signal processor (DSP) and microcontroller (MCU) units. Where FEC schemes are used by the transmitting party to encode data blocks before transmission to the mobile station, the DSP of the receiving mobile station is generally responsible for the channel decoding function, by applying the appropriate FEC scheme to reconstruct the transmitted data blocks. A successfully reconstructed data block, or a message that a received transmission could not be successfully reconstructed, is forwarded to a packet control function, which is generally implemented in the MCU of the receiving mobile station. The packet control function is responsible, for example, for arranging requests to be sent to the transmitter for the retransmission of data blocks that could not be reconstructed successfully by the DSP. In this way, channel decoding and packet control functions are separated, with the DSP being a dedicated signal processing chip suitable for carrying out a limited range of data processing functions much more quickly than would be possible by the more multi-purpose MCU.

The packet control functions carried out by the MCU include maintaining window state variables. A current transmission window, agreed between the transmitter and the mobile station, defines a limited series of data blocks that may be currently transmitted and received. When a data block has been successfully received the transmission window is modified or advanced. The window state variables typically include a record of those data blocks for which transmissions have been received and which have been successfully reconstructed.

In mobile stations implementing a Type II hybrid ARQ system there is a need to store bad blocks. Bad blocks are received transmissions of data blocks that could not be sucessfully reconstructed by the channel decoding function. Stored bad blocks can be combined with later received retransmissions of the same data block to improve the likelihood of a successful reconstruction. The storage of bad blocks may be most conveniently carried out by the DSP, so that bad blocks can be quickly and easily recovered from memory by the channel decoder function when required. However, it will not always be desirable for the channel decoder function to store a bad block. Because of delays and errors in the control communications between the transmitter and the mobile station the bad block may correspond to a data block that has already been successfully reconstructed and forwarded to the packet control function.

For example, the transmitter may maintain a set of transmission timers that record the length of time that has elapsed since a data block was transmitted. Should no response concerning a particular block be received from the mobile station within a particular period then the transmitter automatically retransmits the block. The receiver, however, may no longer consider the retransmitted block to lie within the current transmission window.

In order to determine whether a bad block should be stored or not, it is necessary for the channel decoder function to communicate a query to the packet control function, which can determine whether or not the storage of the bad block is necessary or not from a consideration of the window state variables. The packet control function then needs to communicate an instruction to the channel decoder function to either store or discard the bad block. Such communication for every received bad block may be prohibitive, placing demands on the real-time response of the system. Furthermore, the channel decoder function needs to temporarily store every received bad block until the packet control function instructs the channel decoder function to store or discard each received bad block. The DSP may be required simultaneously to store a number of bad blocks that are subsequently discarded, especially under multislot GSM operation in which up to 8 blocks of data can be received in 20 ms.

It would be desirable to reduce the communications overheads between the channel decoder and packet control functions in a telecommunications system using a Type II ARQ or similar communication scheme, in which the channel decoder and packet control functions are separated.

It would also be desirable to reduce the number of bad blocks that the channel decoder function in such a system is required to store.

### Summary of the Invention

According to a first aspect of the present invention there is provided a method of reconstructing data blocks in an automatic repeat request (ARQ) telecommunications system comprising the steps of:
(a) receiving and making available to a channel decoder one or more encoded first blocks transmitted by a transmitter, the encoded first blocks being encoded from a first data block using a forward error correction (FEC) scheme prior to transmission;
(b) attempting, in said channel decoder, to reconstruct the first data block from one or more of the encoded first blocks available to the channel decoder;
(c) storing said one or more encoded first blocks in available memory so that they continue to be available to the channel decoder, requesting, from the transmitter, retransmission of the first data block as one or more further encoded first blocks, and repeating the steps of the method when the encoded first blocks available to the channel decoder are determined to be corrupted such that the first data block cannot be successfully reconstructed therefrom;
(d) recording in the channel decoder that the first data block has been successfully reconstructed, and forwarding said successfully reconstructed first data block to a packet controller, when the first data block is successfully reconstructed in step (b) from one or more of the encoded first blocks available to the channel decoder; and
(e) discarding any subsequently received encoded first blocks encoded from said first data block.

In automatic repeat request (ARQ) telecommunications schemes data is transmitted along with added parity, checksum or other error checking information. The receiving party checks the integrity of the received data using the error checking information sent with, or incorporated within the data and can request retransmission if the received data is corrupted.

Forward error correction (FEC) schemes are used to reduce or eliminate the need for re-transmission of data by introducing some redundancy into the data before transmission. The data is encoded in such a way that the original data can be reconstructed and checked for errors by the receiving party, with successful reconstruction possible even when the data has been corrupted to some extent during transmission.

Transmissions of FEC encoded data that are received in a form too corrupted to reconstruct the original data may nonetheless contain useful information, and it may be possible to reconstruct the original data from two or more corrupted versions of the encoded data, for example using an incremental redundancy (IR) scheme. An ARQ telecommunications scheme that makes use of FEC and incremental redundancy is commonly known as a Type II hybrid ARQ scheme.

The channel decoder is responsible for applying the forward error correction scheme to decode the received encoded data, combining more than one corrupted version of the received data if available, and when this may assist in the reconstruction of the original data. To do this, the channel decoder needs to arrange storage of previously received but corrupted data for later use. For speed and ease of access, this storage may advantageously be carried out using the same integrated circuit as the channel decoder, or the channel decoder may arrange for storage in a separate hardware device.

The packet controller is responsible for requesting retransmission of encoded data when the channel decoder has not been able to reconstruct the original data from the encoded data already received. The packet controller is also usually responsible for keeping track of what data has already been received, and what data has been successfully reconstructed, and for forwarding successfully reconstructed data to the appropriate next data handling layer for further processing.

The invention is of particular application within telecommunications systems in which the channel decoder and packet control functions are separated, being implemented in separate hardware units, for example as discrete integrated circuits, or as separate software functions or systems which may run on common hardware. Because information indicating whether particular data has been successfully decoded or not is stored in the channel decoder of the present invention, instead of or as well as in the packet controller, the channel decoder is able to determine whether storage of received corrupted data is necessary or not. This reduces the communications overhead that would otherwise be necessary for the channel decoder to query the packet controller as to whether received, corrupted, encoded data should be stored or not, and alleviates the channel decoder from the memory overheads of storing corrupted data that it would otherwise need to store while waiting for confirmation from the packet controller that the data was not needed.

Encoded data that is no longer required may be received by the channel decoder for a number of reasons. One possible cause is delays or errors in communications between the packet controller and the transmitting party, which result in the transmitting party resending data because it has received no acknowledgment within a given time period.

Preferably, an incremental redundancy scheme is used to attempt to reconstruct the first data block when one or more re-transmissions of the first data block have been received and stored by the channel decoder, or when more than one encoded first block is available to the channel decoder.

Preferably, when the one or more encoded first blocks are determined to be corrupted such that the first data block cannot be successfully reconstructed therefrom, step (b) further comprises the step of communicating from the channel decoder to the packet controller that the reconstruction attempt was unsuccessful. The packet controller may then communicate a request to the transmitting party to re-transmit the first data block as one or more further encoded first blocks. Of course, in practice the packet controller will only be responsible for initiating the re-transmit request. Much of the operating detail of constructing and transmitting the request will be hidden from the packet controller, being carried out by other elements of the telecommunications system.

Preferably, when the first data block is successfully reconstructed in step (b) from one or more of said encoded first blocks, step (d) further comprises the step of discarding the encoded first blocks available to the channel decoder, thereby freeing up memory for storage of further bad blocks corresponding to data blocks that have not yet been successfully reconstructed.

The first data block is typically just one of a plurality of similar data blocks to be communicated between the transmitting and receiving parties. Each data block, or other data element such as a packet, is encoded, transmitted, received and decoded as already described above. A number of data blocks may be grouped together into a temporary block flow (TBF) with the transmitting and receiving parties argreeing transmission parameters for each TBF.

Preferably, the channel decoder maintains a record of a transmission window, the transmission window defining a subset of said plurality of data blocks that the channel encoder currently expects to be transmitted by the transmitter as encoded blocks. each of said encoded blocks being encoded from a corresponding one of said plurality of data blocks using a forward error correction scheme.

It is known for transmitting and receiving parties to maintain a mutual transmission window that defines a series or subset of data blocks which it is agreed may currently be transmitted or re-transmitted in any order by the transmitting party. Errors and delays in communications between the parties may lead to inconsistencies between the transmission window records maintained by the parties. Data blocks that lie outside the current transmission window as recorded by the receiving party may then still be transmitted by the transmitting party. Such out-of-window blocks are generally discarded by the receiving party, this decision typically being made by the packet controller which, in the prior art, maintains the receiving party's record of the transmission window. By providing the channel decoder with an independent record of the transmission window, the channel decoder is able to determine whether received data lies outside the current transmission window without having to communicate with the packet controller, and without having to temporarily store data that is subsequently found to be not needed.

Preferably, when the first data block has been successfully reconstructed, step (d) further comprises the step of modifying the transmission window so that the first data block no longer lies within the transmission window, and so that the transmission window includes a new data block that previously was not within the window. Preferably, the new data block is a block which has not yet been reconstructed by the channel decoder.

On receipt of the reconstructed block,or a communication from the channel decoder that a block has been reconstructed, the packet controller may then update its own record of the transmission window and communicate to the transmitting party to do the same.

Preferably, if the first data block does not lie within the current transmission window, then the one or more encoded blocks that have been received and which correspond to the first data block are discarded. Preferably, this is done without attempting to reconstruct the original data block.

Typically, the transmission window defines a sequential subset of an ordered sequence of said plurality of data blocks, and contains a top data block, said top data block being the block most recently added to the scope of the transmission window. In a system in which the transmission window is defined by a numerical or otherwise sequentially ordered series of data block numbers, the bottom and top of the transmission window are typically both advanced by one block in the series when the data block at the bottom of the window has been successfully reconstructed, although other windowing systems are clearly possible. The reconstructed bottom block is thus excluded from the window and a new top block is included.

Preferably, if the amount of available memory for storing encoded blocks is below a memory threshold, and if the first data block lies closer in the ordered sequence of the transmission window, to said top data block than does an upper data block threshold, and if the one or more encoded first blocks available to the channel decoder are determined to be corrupted such that the first data block cannot be successfully reconstructed therefrom, then the one or more encoded first blocks received by the channel decoder are discarded. The thresholds may be determined in a number of different ways, but may conveniently make use of information stored by the channel decoder relating to the current transmission window.

The memory threshold may be determined on the basis of the amount of memory required to store a number of encoded blocks, said number being calculated by multiplying an estimate of the likelihood of the attempt of step (b) being unsuccessful, with the number of data blocks within the current transmission window for which corresponding blocks are currently being stored in available memory.

The upper data block threshold may be determined on the basis of the position of an upper data block within the transmission window, said upper data block being the data block in the transmission window which has already been received as an encoded block and which is closest to said top data block.

Alternatively, the upper data block threshold may be arranged such that the number of data blocks between said top data block and said upper data block threshold is determined on the basis of a number of blocks, said number being calculated by multiplying an estimate of the likelihood of the attempt of step (b) being unsuccessful, with the number of data blocks within the current transmission window for which corresponding encoded blocks are currently being stored in available memory.

According to a second aspect of the present invention there is provided an automatic retransmit request (ARQ) telecommunications system for reconstructing a first data block from one or more encoded first blocks received and stored by the system, each encoded first block being encoded from the first data block using a forward error correction (FEC) scheme prior to reception by the system, the subsystem comprising:
a channel decoder configured to attempt to reconstruct the first data block from one or more of the received encoded first blocks; and
a packet controller, configured to request retransmission of the first data block as one or more subsequent encoded first blocks, when said one or more received encoded first blocks are determined to be corrupted such that the first data block cannot be reconstructed therefrom;
the channel decoder further including means for storing a flag indicative that the said first data block has been reconstructed, and means for discarding upon receipt any further encoded first blocks encoding the said first data block when the flag indicates that the said first data block has been reconstructed.

A system according to the present invention, or a system configured to perform the steps of the present invention may form part of a larger telecommunications system, such as a radio telephony network configured to carry voice or other data, or a cable or fibre optical communications network. The system of the present invention may, for example, conveniently be used within mobile stations such as mobile telephones of a radio telephony network. In particular, but not exclusively, the invention may find application within network hardware and mobile stations implementing the Enhanced General Packet Radio System designed to work on GSM networks.

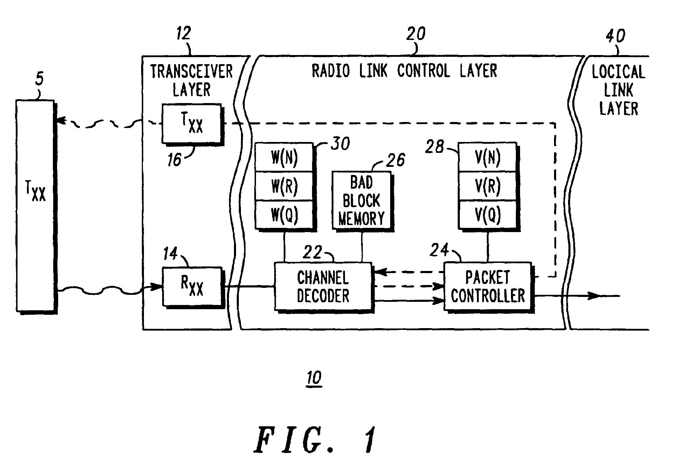

An embodiment of the invention will now be described, by way of example only, with reference to Figure 1, which illustrates a telecommunications subsystem using a Type II ARQ communications scheme embodying the present invention.

Referring to Figure 1, a system is shown having a transmitting station 5 and a receiving station 10 that together provide communication of digital data blocks using a Type II hybrid ARQ scheme. The flow of the digital data blocks within the system is shown by solid arrows, whereas the flow of other communications such as instructions and control information is shown by broken arrows.

The receiving station 10 may typically be a mobile station such as a digital cellular radio telephone handset. A transceiver section 12 of the receiving station 10 comprises a receiver unit 14 and a transmitter unit 16 that communicate with the transmitter station 5. In practice, the transceiver section 12 may make use of much circuitry common with other parts of the receiving station 10 to perform oscillator, amplifier, modulation / de-modulation, interleaving / de-interleaving, ciphering / deciphering and other functions.

The transmitting station 5 encodes data blocks using a forward error correction (FEC) scheme, before transmitting these encoded blocks to the receiving station 10. The term FEC scheme is used here to mean any coding scheme that allows the partly corrupted transmission of a data block to be reconstructed at the receiving station using only information contained within the transmission, and which preferably allows the use of previous corrupt transmissions of the same data block to be used to assist in the reconstruction. The FEC scheme may, for example, include a puncturing scheme to reduce the number of bits transmitted in a data block transmission under favourable transmission conditions. In an adaptive system the schemes used and their controlling parameters may change from time to time in response to varying transmission conditions.

The encoded data blocks contain error check information to enable the receiving station 10 to determine if a data block has been received and reconstructed correctly.

An encoded data block received by the receiver unit 14 is passed to a radio link control layer 20, which incorporates a channel decoder 22 and a packet controller 24. The channel decoder 22 receives the encoded data block from the receiver unit 14. The channel decoder 22 is arranged to apply the FEC scheme with which the received encoded data block was encoded by the transmitter 5, to thereby attempt to reconstruct the original data block.

Should the data block be successfully reconstructed it is passed via the packet controller 24 onto a logical link layer 40 of the receiver 10 for further processing as appropriate.

Both the packet controller 24 and the channel decoder 22 maintain a number of window state variables 28,30 that describe the state of the current transmission window. Details of the current transmission window, which define the series of data blocks that may currently be transmitted and received, are also held by the transmitting station 5. Each data block transmitted by the transmitting station 5 is labelled with a block sequence number (BSN) that is unique to that data block within the scope of the blocks within the current transmission window.

The window state variables 28 held by the packet controller 24 include V(Q), V(R) and V(N). Window state variable V(R) records the BSN that defines the bottom of the current transmission window. Window state variable V(Q) records the BSN that defines the top of the current transmission window. Window state variable V(N) is an array which records, for each BSN in the current transmission window, whether the data block corresponding to each BSN has been successfully reconstructed by the channel decoder 22 or not. Equivalent state variables W(Q), W(R) and W(N) are held by the channel decoder 22.

The total number of available block sequence numbers may be limited to, say, twice the size of the transmission window, so that the V(N) and W(N) variables can be structured as arrays indexed by the limited number of all possible BSNs. Typically, the window may be limited at any one time to a series of 64 BSNs out of a total of 128 permitted different BSNs. When the data block at the bottom of the window has been successfully reconstructed by the receiving station 10 the lower and upper boundaries of the window are moved on by one BSN. The window typically wraps around the limited series of possible block sequence numbers.

A bad block memory 26 is provided for use by the channel decoder 22 to store received encoded data blocks that the channel decoder has failed successfully to reconstruct. These stored bad blocks may be combined with a newly received transmission of encoded data blocks encoded from the same original data blocks to improve the chances of the data blocks' being successfully reconstructed without the need for any further retransmissions of the same data blocks.

When the channel decoder 22 receives an encoded data block that is in the current transmission window, use of variable W(N) enables the channel decoder to determine whether or not the transmitted data block has already been successfully reconstructed, without having to request this information from the packet controller 24. If W(N) indicates that the data block has already been successfully reconstructed, then decoding of the received encoded data block is not required, and the encoded data block can be immediately discarded.

If the encoded data block was encoded from a data block that is in the current transmission window, but that W(N) indicates has not yet been successfully reconstructed, then the channel decoder 22 will proceed to attempt to reconstruct the original data block using the received transmission and any previously received bad blocks with the same BSN that are present in the bad block memory. If the channel decoder 22 fails to successfully reconstruct the data block then the transmission may be stored as a bad block in the bad block memory 26, and the packet controller 24 informed of the reception of the bad block. The packet controller 24 then arranges a request to be communicated to the transmitting station 5 to send a further encoded transmission of the data block. A memory control strategy may be used to decide whether or not to store a bad block if the amount of bad block memory 26 currently available is limited or likely to become limited.

If the channel decoder 22 successfully reconstructs the data block, then the data block is forwarded to the packet controller 24. The appropriate record in array variable W(N) is updated to indicate that the block has been successfully reconstructed. If the reconstructed data block corresponds to the bottom of the transmission window, as recorded in W(Q), then W(Q) and W(R) are incremented to indicate an advance of the transmission window.

On receipt of the reconstructed data block, the packet controller 24 increments the corresponding variables V(Q) and V(R), and marks the appropriate record in V(N) to indicate that the block has been successfully reconstructed. The packet controller 24 forwards the reconstructed data block onto the logical link layer 40 of the receiving station 10 for further processing. If the reconstructed block corresponds to the bottom of the transmission window, as recorded in V(Q), then V(Q) and V(R) are incremented to indicate an advance of the transmission window. The packet controller 24 also arranges for a communication to be sent to the transmitting station 5 indicating successful reconstruction of the block, so that the transmitting station can maintain a matching transmission window.

The communication from the channel decoder 22 to the packet controller 24 concerning either a bad block or a successfully reconstructed block includes a number of items of information including at least the block sequence number and the reconstructed block, if available. The system may allow for the transmission of a single logical data block in two or more transmitted encoded data blocks carrying the same BSN, in which case a split block flag will also be required.

A number of data blocks are generally grouped together for transmission into a single temporary block flow (TBF). Such a TBF may typically comprise hundreds or thousands of individual data blocks, depending, for example, on the nature of the data being transmitted and the prevailing transmission conditions. The start and the end of the TBF are agreed between the transmitting station 5 and the receiving station 10. At the beginning of each temporary block flow the packet controller 24 sends a signal to the channel decoder 22 to reset the channel decoder transmission window state variables 30. This signal also indicates the values of the variables to be initialised and the size of the next transmission window. This is the only message that needs to be sent from the packet controller 24 to the channel decoder 22 in respect of each TBF. The packet controller 24 and channel decoder 22 can operate autonomously thereafter throughout the duration of the TBF. Furthermore, this message can be conveniently carried in another existing message between the packet controller 24 and channel decoder 22 that is used to initialise a new TBF.

Thus, using the duplicated window state variables 28,30 the channel decoder 22 is able to maximise the throughput of the radio link control layer 20 and reduce the probability of protocol stalling. The amount of bad block memory 26 required is reduced because the channel decoder 22 is able to determine if a bad block should be stored without having to send a request to the packet controller 24 and wait for a response before possibly discarding a bad block. However, the amount of bad block memory available may still be limited, particularly in miniaturised equipment such as hand held cell radio telephones.

In a preferred embodiment of the invention, therefore, a memory management scheme is used to optimise the usage of bad block memory. In this scheme, bad blocks with BSNs towards the bottom of the current transmission window are stored in preference to those towards the top of the window. Preferably, this scheme is implemented in the channel decoder, or in an associated hardware or software unit, making use of the window state variables 30 available to the channel decoder to further reduce the memory and communications overheads between the channel decoder 22 and the packet controller 24.

In a preferred embodiment, the memory management scheme makes use of a low memory threshold and an upper data block threshold. While the amount of memory available to the channel decoder for storing bad blocks remains above, or perhaps equal to, the low memory threshold, bad blocks that correspond to data blocks lying within the current transmission window which have not yet been successfully reconstructed are stored for further use. However, should the available memory become equal to or perhaps fall below the low memory threshold then the channel decoder is configured to consider the position of each bad block within the transmission window. Bad blocks corresponding to data blocks lying at or below the upper data block threshold are stored, as long as sufficient memory remains for this. Bad blocks corresponding to data blocks that lie above the upper data block threshold in the current transmission window are discarded. In this way, preference is given to the storage of bad blocks that lie towards the bottom of the window, increasing the likelihood of successfully reconstructing of the corresponding data blocks and advancing the transmission window.

The low memory threshold may conveniently be calculated by determining the number of data blocks lying within the transmission window for which bad blocks have already been received and are currently being stored, but which have not yet been successfully reconstructed by the channel decoder. Such a number may be denoted **B**_{**e**}, the number of blocks in error. To obtain a figure for the low memory threshold, **B**_{**e**} is multiplied by an estimate of the block error rate, **BLER**. The block error rate indicates the likelihood of the channel decoder failing to reconstruct a data block using any one newly received encoded block in conjunction with any corresponding bad blocks available in the bad block memory. **BLER** may be defined in a number of ways. For example, it may be taken as a fixed fraction typical of the system, or could be calculated as a running mean based on the proportion of encoded blocks received as bad blocks. If **BLER** is calculated dynamically, more complex methods of calculation could be used, for example by taking account of recent values of **BLER** using a convolution window or using simple ceiling and floor functions.

As an alternative, the low memory threshold could be defined as a fixed amount of memory or a fixed fraction of memory available, or could be calculated using much more complex predictions of the memory that will be required in the immediate future. A variety of other ways in which the low memory threshold could be usefully defined will be apparent to the person skilled in the art. The low memory threshold used should seek to optimise the balance between avoiding running out of memory and making best use of the memory that is available, thereby maximising the available memory resources to maximise data throughput. It would, of course, be possible to use more complex methods of determining whether a bad block should be stored than by using a simple threshold, for example the number of bad blocks corresponding to the same data block that have already stored may be taken into account, or a measure of the corruption of the bad block may be used.

If the low memory threshold is reached then bad blocks lying within the transmission window at or above the upper data block threshold are discarded. The upper data block threshold, like the low memory threshold, may be defined in a number of ways. For example, it may be defined as having a fixed position within the transmission window. Alternatively, it may be defined in such a way that any bad block with a BSN higher than that of any currently stored bad block, or of any encoded block yet received in the current transmission window, is discarded. In a preferred embodiment, however, the upper data block threshold is defined in such a way that the threshold moves towards the bottom of the window as the number of bad blocks that are expected to be received increases. This may conveniently be achieved by multiplying the block error rate **BLER** by the number of blocks in error **B**_{**e**}**,** these variables being defined above. The result of this multiplication is used to determine the number of data blocks in the transmission window that should remain above the upper data block threshold. As with the low memory threshold, a variety of more complex means for achieving the effect of the upper data block threshold may be used. For example, priority could be given to bad blocks which appear to be relatively uncorrupted.

In order to carry out the memory management methods described above a number of window state variables may be stored by the channel decoder, or by the associated hardware or software means for carrying out the memory management scheme. In particular, a window state array indicating for which data blocks in the transmission window encoded blocks have been received, stored, discarded or otherwise handled, may be required. Generally, it will be desirable to update all the described variable parameters, including the thresholds themselves if not defined by constants, at regular intervals, and preferably after each allocation and deallocation of memory for the storage or discarding of a bad block. The required window state information may conveniently be stored along with the channel decoder window state variables 30.

In another preferred embodiment the receiving station 10 is configured to send a communication to the transmitting station 5 when a problem in processing received data is anticipated, for example when the amount of memory available for the storage of bad blocks is low. Such a communication may, for example, be sent when the amount of memory available for the storage of bad blocks falls to a level corresponding to the number of bad blocks the receiving station 10 estimates will be received within the time taken for the transmitter station 5 to react to the communication. This estimate may be based on the block error rate discussed above, a total block reception rate and a typical or dynamically monitored reaction time.

The invention illustrated by the described embodiments is particularly applicable to the implementation of the Enhanced General Packet Radio System standards proposed as part of GSM, and more generally to cellular packet radio applications, such as the use of mobile telephone handsets to access digital data via the Internet. However, the invention is useful in any telecommunications system using a Type II hybrid ARQ or similar communication scheme in which the channel decoder 22 and packet controller 24 functions are separated. This separation may result from using physically separate electronic components or circuits, or as the logical separation of distinct software elements.

Systems of the present invention may make use of radio, microwave, cables, optical fibres or any other communications medium, and may for example form part of a network infrastructure rather than providing digital data to an end user.

The channel decoder could be provided with any of a variety of different means for deciding whether a bad block needs to be stored, the window state variables of the described embodiment being merely an example. Instead of using a transmission window the system could operate using dynamically allocated lists of datablocks, and many other suitable variable structures will be apparent to the person skilled in the art.

The channel decoder 22 and packet controller 24 could be distinct hardware or software entities that both have access to a common area of memory, or could each be provided with their own physical memory.

## Claims

1. A method of reconstructing data blocks in an automatic retransmit request (ARQ) telecommunications system comprising the steps of:
(a) receiving and making available to a channel decoder one or more encoded first blocks transmitted by a transmitter, the encoded first blocks being encoded from a first data block using a forward error correction (FEC) scheme prior to transmission;
(b) attempting, in said channel decoder, to reconstruct the first data block from one or more of the encoded first blocks available to the channel decoder;
(c) storing said one or more encoded first blocks in available memory so that they continue to be available to the channel decoder, requesting, from the transmitter, retransmission of the first data block as one or more further encoded first blocks, and repeating the steps of the method, when the encoded first blocks available to the channel decoder are determined to be corrupted such that the first data block cannot be successfully reconstructed therefrom;
(d) recording in the channel decoder that the first data block has been successfully reconstructed, and forwarding said successfully reconstructed first data block to a packet controller, when the first data block is successfully reconstructed in step (b) from one or more of the encoded first blocks available to the channel decoder; and
(e) discarding any subsequently received encoded first blocks encoded from said first data block.

2. A method as claimed in claim 1 in which, in step (c), the encoded first blocks are stored in available memory by the channel decoder.

3. A method as claimed in either of claims 1 or 2 in which, in step (b), an incremental redundancy scheme is used to attempt to reconstruct the first data block when more than one encoded first block is available to the channel decoder.

4. A method as claimed in any preceding claim in which step (b) further comprises the step of communicating from the channel decoder to the packet controller that the reconstruction attempt was unsuccessful, when the one or more encoded first blocks are determined to be corrupted such that the first data block cannot be successfully reconstructed therefrom.

5. A method as claimed in claim 4 in which the step of requesting retransmission of the first data block is initiated by the packet controller.

6. A method as claimed in any preceding claim, in which step (d) further comprises the step of discarding the encoded first blocks available to the channel decoder, when the first data block is successfully reconstructed in step (b) from one or more of said encoded first blocks.

7. A method as claimed in any preceding claim, in which the first data block is one of a plurality of similar data blocks to be reconstructed.

8. A method as claimed in claim 7, in which the channel decoder maintains a record of a transmission window, said transmission window defining a subset of said plurality of data blocks that the channel encoder currently expects to be transmitted by the transmitter as encoded blocks, each of said encoded blocks being encoded from a corresponding one of said plurality of data blocks using a forward error correction scheme prior to transmission.

9. A method as claimed in claim 8, in which step (d) further comprises the step of modifying the record of the transmission window so that the first data block no longer lies within the transmission window, and so that the transmission window includes one of said plurality of data blocks that was not previously within the window.

10. A method as claimed in either of claims 8 or 9, wherein step (a) further comprises the steps of discarding said one or more encoded first blocks, and repeating step (a), if said first data block does not lie within said transmission window.

11. A method as claimed in any of claims 8 to 10 wherein
said transmission window defines a sequential subset of an ordered sequence of said plurality of data blocks, and
said transmission window contains a top data block, said top data block being the block most recently added to the scope of the transmission window,
step (b) further comprising the steps of discarding the one or more encoded first blocks, and repeating the method, if the amount of said available memory is below a memory threshold, said first data block lies closer in said ordered sequence to said top data block than does an upper data block threshold, and the one or more encoded first blocks available to the channel decoder are determined to be corrupted such that the first data block cannot be successfully reconstructed therefrom.

12. The method of claim 11 wherein said memory threshold is determined on the basis of the amount of memory required to store a number of encoded blocks, said number being calculated by multiplying an estimate of the likelihood of the attempt of step (b) being unsuccessful, with the number of data blocks within the current transmission window for which corresponding encoded blocks are currently being stored in available memory.

13. The method of either of claims 11 or 12 wherein said upper data block threshold is determined on the basis of the position of an upper data block within the transmission window, said upper data block being the data block in the transmission window which has already been received as an encoded block and which is closest to said top data block.

14. The method of either of claims 11 or 12 wherein said upper data block threshold is arranged such that the number of data blocks between said top data block and said upper data block threshold is determined on the basis of a number of blocks, said number being calculated by multiplying an estimate of the likelihood of the attempt of step (b) being unsuccessful, with the number of data blocks within the current transmission window for which corresponding encoded blocks are currently being stored in available memory.

15. An automatic retransmit request (ARQ) telecommunications system for reconstructing a first data block from one or more encoded first blocks received and stored by the system, each encoded first block being encoded from the first data block using a forward error correction (FEC) scheme prior to reception by the system, the system comprising:
a channel decoder configured to attempt to reconstruct the first data block from one or more of the received encoded first blocks; and
a packet controller, configured to request retransmission of the first data block as one or more subsequent encoded first blocks, when said one or more received encoded first blocks are determined to be corrupted such that the first data block cannot be reconstructed therefrom;
the channel decoder further including means for storing a flag indicative that the said first data block has been reconstructed, and means for discarding upon receipt any further encoded first blocks encoding the said first data block when the flag indicates that the said first data block has been reconstructed.

16. A system as claimed in claim 15 in which the channel decoder is provided with a memory for the storage of received encoded blocks.

17. A system as claimed in either of claims 15 or 16, the channel decoder being further configured to use an incremental redundancy scheme to attempt to reconstruct the first data block when more than one encoded first block has been received and stored.

18. A system as claimed in any of claims 15 to 17, in which the first data block is one of a plurality of similar data blocks to be transmitted.

19. A system as claimed in any of claims 15 to 18, in which the channel decoder further includes means for maintaining a record of a transmission window, said transmission window defining a subset of said plurality of data blocks that the channel decoder currently expects to receive as encoded blocks, each of said encoded blocks being encoded from a corresponding one of said plurality of data blocks using a forward error correction scheme prior to transmission.

20. A system as claimed in claim 19, in which the channel decoder is further configured to modify the record of the transmission window so that said first data block no longer lies within said transmission window, and so that the transmission window includes one of said plurality of data blocks not previously within the window, when said first data block has been reconstructed by the channel decoder.

21. A system as claimed in either of claims 19 or 20 in which the channel decoder is further configured to discard said one or more encoded first blocks, if said first data block does not lie within said transmission window.

22. A system as claimed in any of claims 19 to 21 wherein
said transmission window defines a sequential subset of an ordered sequence of said plurality of data blocks, and
said transmission window contains a top data block, said top data block being the data block most recently added to the scope of the transmission window,
the channel decoder being further configured to discard said encoded one or more first blocks if said available memory is equal to or below a memory threshold, said first data block lies closer to said top data block in said ordered sequence than an upper data block threshold, and said one or more received encoded first blocks are determined to be corrupted such that the first data block cannot be reconstructed therefrom.

23. The system of claim 22, the channel decoder being further configured to determine said memory threshold on the basis of the amount of memory required to store a number of blocks, said number being calculated by multiplying an estimate of the proportion of encoded blocks received within the transmission window from which the original data block cannot be successfully reconstructed in combination with any available previously received and stored corresponding encoded blocks, with the number of data blocks within the current transmission window which have not been reconstructed but for which corresponding encoded blocks been received and are currently being stored.

24. The system of either of claims 22 or 23, the channel decoder being further configured to determine said upper data block threshold on the basis of the position of an upper data block lying within the transmission window, said upper data block being the data block in the transmission window which has already been received as an encoded block and which is closest to said top data block.

25. The system of either of claims 22 or 23, the channel decoder being further configured to determine said upper data block threshold in such a way that the number of data blocks between the top data block and said upper data block threshold is determined on the basis of a number of blocks, said number being calculated by multiplying an estimate of the proportion of encoded blocks received within the transmission window from which the original data block cannot be successfully reconstructed in combination with any available previously received and stored corresponding encoded blocks, with the number of data blocks within the current transmission window which have not been reconstructed but for which corresponding encoded blocks have been received and are currently being stored.

26. A system as claimed in any of claims 15 to 25 further comprising a transmitter configured to encode said first data block using said forward error correction scheme and to transmit said one or more encoded first data blocks.

27. A mobile telephone including the system of any of claims 15 to 25.

28. A mobile telephone comprising means for carrying out the steps of any of claims 1 to 14.

29. One or more computer program elements having computer program code arranged to execute the steps of any of claims 1 to 14.
